(19) Europäisches Patentamt
European Patent Office
Office européen des brevets

(11) **EP 2 128 754 B1**

(12) **EUROPÄISCHE PATENTSCHRIFT**

(45) Veröffentlichungstag und Bekanntmachung des Hinweises auf die Patenterteilung:
**26.10.2011 Patentblatt 2011/43**

(51) Int Cl.:
**G06F 7/72** *(2006.01)*

(21) Anmeldenummer: **09007007.9**

(22) Anmeldetag: **26.05.2009**

(54) **Sichere sliding window exponentiation**

Safe sliding window exponentiation

Exponentiation sûre de fenêtre coulissante

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **30.05.2008 DE 102008026099**

(43) Veröffentlichungstag der Anmeldung:
**02.12.2009 Patentblatt 2009/49**

(73) Patentinhaber: **Giesecke & Devrient GmbH 81677 München (DE)**

(72) Erfinder: **Bauer, Sven, Dr. 85591 Vaterstetten (DE)**

(56) Entgegenhaltungen:
- **NADIA NEDJAH ET AL: "Efficient Hardware for Modular Exponentiation Using the Sliding-Window Method" INFORMATION TECHNOLOGY, 2007. ITNG '07. FOURTH INTERNATIONAL CONFERENCE ON, IEEE, PI, 1. April 2007 (2007-04-01), Seiten 17-24, XP031076019 ISBN: 978-0-7695-2776-5**
- **NADIA NEDJAH ET AL: "A Hardware/Software Co-design vs. Hardware Implementation of the Modular Exponentiation Using the Sliding-Window Method with Constant-Length Partitioning" 10TH EUROMICRO CONFERENCE ON DIGITAL SYSTEM DESIGN ARCHITECTURES, METHODS AND TOOLS (DSD 2007), LOS ALAMITOS, CALIF. [U.A.] : IEEE COMPUTER SOC, PISCATAWAY, NJ, USA, 1. August 2007 (2007-08-01), Seiten 116-123, XP031141351 ISBN: 978-0-7695-2978-3**
- **CHEVALLIER-MAMES B ET AL: "Low-Cost Solutions for Preventing Simple Side-Channel Analysis: Side-Channel Atomicity" IEEE TRANSACTIONS ON COMPUTERS, IEEE SERVICE CENTER, LOS ALAMITOS, CA, US, Bd. 53, Nr. 6, 1. Juni 2004 (2004-06-01), Seiten 760-768, XP011111508 ISSN: 0018-9340**
- **"EFFICIENT IMPLEMENTATION" HANDBOOK OF APPLIED CRYPTOGRAPHY, XX, XX, 1. Januar 1997 (1997-01-01), Seiten 591-634, XP008055020**

1 EP 2 128 754 B1 2

**Beschreibung**

Die Erfindung betrifft ein Verfahren zur Berechnung einer Exponentiation gemäß dem Sliding Window Algorithmus.

Viele kryptographische Public Key Verfahren, d.h. asymmetrische Verschlüsselungsverfahren mit unterschiedlichen Schlüsseln für die Verschlüsselung und die Entschlüsselung von Daten, beruhen auf einer Exponentiation in einer Gruppe, d.h. die Basis der Exponentiation ist ein Element einer Gruppe. Die Gruppe kann wahlweise eine multiplikativ geschriebenen Gruppe oder eine additiv geschriebene Gruppe sein. Beispiele für solche Public Key Verfahren sind RSA, DSA, Diffie-Hellmann und analoge Verfahren. Als multiplikativ geschriebene Gruppe wird beispielsweise eine multiplikativ geschriebene elliptische Kurve oder hyperelliptische Kurve verwendet, wie z.B. für EC-DSA oder EC-Diffie-Hellman, oder die Gruppe der ganzen Zahlen modulo n, genauer die Gruppe der zu n teilerfremden Restklassen mod n, $Z_n^*$. Als additiv geschriebene Kurve wird beispielsweise eine additiv geschriebene elliptische Kurve oder hyperelliptische Kurve verwendet. In einer additiv geschriebenen Gruppe, d.h. in dem Fall, wenn die Gruppenstruktur der Gruppe, beispielsweise einer elliptischen oder hyperelliptischen Kurve, additiv geschrieben ist, wird als Exponentiation in der additiv geschriebenen Gruppe eigentlich eine Multiplikation durchgeführt. Im Zusammenhang mit der Erfindung soll der Begriff Exponentiation sowohl eine Exponentiation in einer multiplikativ geschriebenen Gruppe als auch eine Multiplikation in einer additiv geschriebenen Gruppe umfassen.

Zur Verschlüsselung einer Nachricht m nach dem RSA-Verfahren wird im einfachsten Fall eine modulare Exponentiation

$$(1) \qquad A = m^e \bmod n$$

durchgeführt. Die Parameter e und n bilden den öffentlichen Schlüssel des RSA-Schlüsselpaares. Die Basis m ist ein Element der zu Grunde gelegten

Gruppe, der Exponent e ist eine nicht-negative ganze Zahl, und als Modulus n wird das Produkt zweier Primzahlen p, q verwendet. Zum Entschlüsseln der Nachricht wird eine modulare Exponentiation

$$(2) \qquad m = A^d \bmod n$$

berechnet. Der Exponent d bildet den geheimen privaten Schlüssel des RSA-Schlüsselpaares und ist wie e eine nicht-negative ganze Zahl.

In konkreten Implementierungen eines Public Key Verfahrens ist typischerweise die Exponentiation die zeitaufwendigste Operation. Gerade bei Implementierungen in Geräten mit beschränkten Ressourcen wie beispielsweise Chipkarten ist es wichtig, für die Berechnung der Exponentiation ein schnelles Verfahren einzusetzen. Gehen in die Exponentiation geheime Daten ein, wie beispielsweise geheime Schlüssel, sollte die Implementierung der Exponentiation andererseits gegen Seitenkanalangriffe geschützt werden.

Zur Berechnung einer Exponentiation sind unterschiedliche Verfahren bekannt, wovon beispielsweise einige in Alfred Menezes, Paul C. van Oorschot, and Scott A. Vanstone, "Handbook of applied cryptography" (im Folgenden "Menezes" genannt) in Kapitel 14.6 beschrieben sind. Dabei gibt es typischerweise eine gegenläufige Tendenz zwischen der Effizienz und der Sicherheit des Verfahrens.

Das einfachste aber zugleich ein sehr zeitaufwendiges Verfahren zur Berechnung der Exponentiation $A = g^e$ besteht darin, e-1 Multiplikationen von g mit sich selbst durchzuführen. Effizienter sind Algorithmen vom Typ "Repeated Square- and Multiply", die z.B. in Menezes, Kapitel 14.6, beschrieben sind. Im Repeated Square and Multiply Algorithmus Nr. 14.79 wird der Exponent bitweise abgearbeitet und die Basis $g$ zu einem ersten Zwischenergebnis quadriert und das Zwischenergebnis fortlaufend wieder quadriert. Ist ein Exponentenbit Eins, wird zusätzlich eine Multiplikation mit der Basis durchgeführt. Durch die Quadrierungen verringert sich die Anzahl der durchzuführenden Multiplikationen und dadurch die erforderliche Zeitdauer zur Berechnung der Exponentiation $A = g^e$.

In Menezes ist in Kapitel 14.6 als Algorithmus Nr. 14.85 der Sliding Window Algorithmus zur Berechnung einer Exponentiation beschrieben. Als Eingangsdaten der Exponentiation werden die Basis $g$, der Exponent $e = (e_t e_{t-1} \cdots e_1 e_0)_2$ in Binärdarstellung, mit $e_t = 1$, und die Fenstergröße $k$ verwendet. Die Basis g ist ein Element einer multiplikativen Gruppe, der

Exponent $e = (e_t e_{t-1} \cdots e_1 e_0)_2$ ist eine nicht-negative ganze Zahl, und die Fenstergröße ist eine ganze Zahl $k \geq 1$. Die Fenstergröße k kann bei der Abarbeitung eines Exponenten variabel oder fest sein. Ausgangsdatum der Exponentiation ist $A = g^e$. Der Sliding Window Algorithmus umfasst die folgenden Schritte:

(3) Sliding Window Algorithmus:

1. Vorberechnung

1.1. $g_1 \leftarrow g$, $g_2 \leftarrow g^2$;
1.2. für i von 1 bis $(2^{k-1} - 1)$ führe durch $g_{2i+1} \leftarrow g_{2i-1} \cdot g_2$;

2. $A \leftarrow 1, i \leftarrow t$ ;

3. während i ≥ 0 ist, führe Folgendes durch:

3.1. falls $e_i = 0$ , dann führe durch: $A \leftarrow A^2, i \leftarrow i\text{-}1$;
3.2. sonst ($e_i \neq 0$), finde die längste Bitfolge $e_i e_{i-1} \cdots e_l$, so dass $i - l + 1 \leq k$ und $e_l = 1$ und führe Folgendes durch:

$$A \leftarrow A^{2^{i-l+1}} \cdot g_{(e_i e_{i-1} \cdots e_l)_2} , \; i \leftarrow l-1;$$

4. Ausgabe des Ergebnisses A der Exponentiation.

Durch den Sliding Window Algorithmus (3) wird die Anzahl erforderlicher Multiplikationen, mit $A$ selbst oder mit $g^i$, um $A = g^e$ zu berechnen, stark reduziert. Exponentiationen nach dem Sliding Window Algorithmus sind daher besonders schnell. Gegenüber einem einfachen Square and Multiply Verfahren lassen sich beispielsweise mit einem Sliding Window Verfahren mit einer festen Fensterbreite von drei (d.h. k=3) ungefähr 14 % Rechenzeit sparen.

Der Sliding Window Algorithmus (3) ist gegenüber Seitenkanalangriffen gefährdet, beispielsweise Stromangriffe wie z.B. einfache Leistungsanalyse (Simple Power Analysis (SPA)) oder differentielle Leistungsanalyse (Differential Power Analysis (DPA)). Seitenkanalangriffe sind beispielsweise in Paul C. Kocher, Joshua Jaffe, and Benjamin Jun, "Differential power analysis", CRYPTO '99 (M. Wiener, ed.), LNCS, no. 1666,199, pp. 388-397 ("Kocher"), oder in Suresh Chari, Josyula R. Rao, and Pankaj Rohatgi, "Template Attacks", Cryptographic Hardware and Embedded Systems 2003 (Burt S. Kaliski, Çetin K. Koç, and Christof Paar, eds.), LNCS, no. 2523, Springer-Verlag, 2003, pp. 13-28, beschrieben. Bei einem Seitenkanalangriff wird beispielsweise der Stromverbrauch eines Prozessors während des Durchführens einer Berechnung gemessen und aus dem Stromverbrauch auf die bei der Berechnung verwendeten Daten rückgeschlossen.

Bei einer Implementierung des Sliding Window Algorithmus, die unmittelbar Algorithmus (3) umsetzt, enthält der implementierte Programmcode bedingte Verzweigungen, die vom abzuarbeitenden Exponenten abhängen. In Abhängigkeit vom Wert eines gerade abzuarbeitendes Exponentenbits, Null oder ungleich Null, wird ein unterschiedlicher Prozess abgearbeitet, nämlich gemäß Schritt 3.1 oder gemäß Schritt 3.2 in Algorithmus (3). Solche Unterschiede im Programmablauf sind im Stromprofil des Programmablaufs in der Regel leicht zu erkennen. Insbesondere dauert die Abarbeitung eines Exponentenbits mit einem von Null unterschiedlichen Wert gemäß Schritt 3.2 im obigen Algorithmus (3) wesentlich länger als die Abarbeitung eines Exponentenbits, das den Wert Null hat, gemäß Schritt 3.1 im Algorithmus (3). Mit einem Seitenkanalangriff, bei dem bei einer Exponentiation die Bearbeitungsdauer der einzelnen Exponentenbits mitverfolgt wird, lässt sich der Wert jedes einzelnen Exponentenbits erkennen und somit der Exponent ausspähen. Wird beim RSA-Verfahren der Exponent beim Entschlüsseln einer Nachricht ausgespäht, kann folglich gemäß Gleichung (2) der geheime private RSA-Schlüssel ausgespäht werden.

Um einen Algorithmus wie den Sliding Window Algorithmus resistent gegen Seitenkanalangriffe zu machen, muss versucht werden, die unterschiedlichen Prozesse für die unterschiedlichen Werte des Exponentenbits ununterscheidbar zu machen.

Eine bekannte Maßnahme gegen Seitenkanalangriffe besteht darin, in eine Berechnung Dummy-Operationen, d.h. zusätzliche, mit fiktiven Daten durchgeführte Rechenschritte, deren Ergebnisse verworfen werden, oder sonstige Prozessschritte wie z.B. Wartezeiten einzufügen und somit Teilabschnitte der Berechnung ununterscheidbar zu machen.

Der Fachartikel Nadia Nedjah, Luiza de Macedo Mourelle, Rodrigo Martins da Silva, "Efficient Hardware for Modular Exponentiation Using the Sliding-Window Method", IEEE International Conference on Information Technology 2007, ITNG '07, offenbart eine Implementierungsmöglichkeit für ein Verfahren zum Berechnen eines Ergebnisses einer modularen Exponentiation, das gemäß dem Sliding Window Algorithmus berechnet wird, wobei das Verfahren als endlicher Automat (state machine) implementiert ist. Gemäß Kapitel 3, dritter Absatz ("The pre-computed ...") des Artikels wird lediglich bei einem Teilabschnitt des Exponenten, der nicht Null ist, ein Speicherzugriff durchgeführt und eine vorberechnete Potenz ausgelesen und verwendet ("Later on, i.e. in the exponentiation step, each non-zero partition of the exponent E is used to adress the memory, read and use the pre-computed power"). Somit wird, abhängig vom Wert des gerade bearbeiteten Teilabschnitts des Exponenten, Null oder nicht Null, eine unterschiedliche Operation durchgeführt. Diese Art der Implementierung stellt eine unmittelbare Umsetzung des Sliding Window Algorithmus dar, bei dem abhängig vom Wert des gerade bearbeiteten Teilabschnitts des Exponenten, Null oder nicht Null, eine unterschiedliche Operation durchgeführt wird. Die Abhängigkeit der durchzuführenden Operation vom Exponentenwert bietet einen Angriffspunkt für Seitenkanalangriffe auf die Exponentiation.

Der Fachartikel Nadia Nedjah, Luiza de Macedo Mourelle, "A Hardware /Software Co-design vs. Hardware Implementation of the Modular Exponentiation Using the Sliding-Window Method with Constant-Length Partitioning" offenbart eine weitere Implementierungsmöglichkeit für ein Verfahren zum Berechnen eines Ergebnisses einer modularen Exponentiation, das gemäß dem Sliding Window Algorithmus berechnet wird, wobei das Verfahren als endlicher Automat (state machine) implementiert ist. Die Implementierung umfasst bedingte Verzweigungen, bei denen in Abhängigkeit vom Exponentenwert unterschiedliche Operationen durchgeführt werden. Beispielsweise wird gemäß Kapitel V. "Hardware-Only-Proposed Implementations", Unterkapitel C. "The Controllers" , I) "Controller of the partitioning process" in einem Schritt S1 ein Wert eines Exponentenbits ermittelt. Falls das Exponentenbit ungleich Null ist, wird zu Schritt S2 gegangen, ein Datum in den Speicher geladen, ein Schieberegister d-mal verschoben, ein Zähler Counter1 zurückgesetzt, ein Zähler Counter2 erhöht, und zu Schritt S5 gegangen. Falls das Exponentenbit aus Schritt S1 Null ist, wird sofort zu Schritt S5 gegangen. Auch hier bietet eine Abhängigkeit der durchzuführenden Operation vom Exponentenwert einen Angriffspunkt für Seitenkanalangriffe auf die Exponentiation.

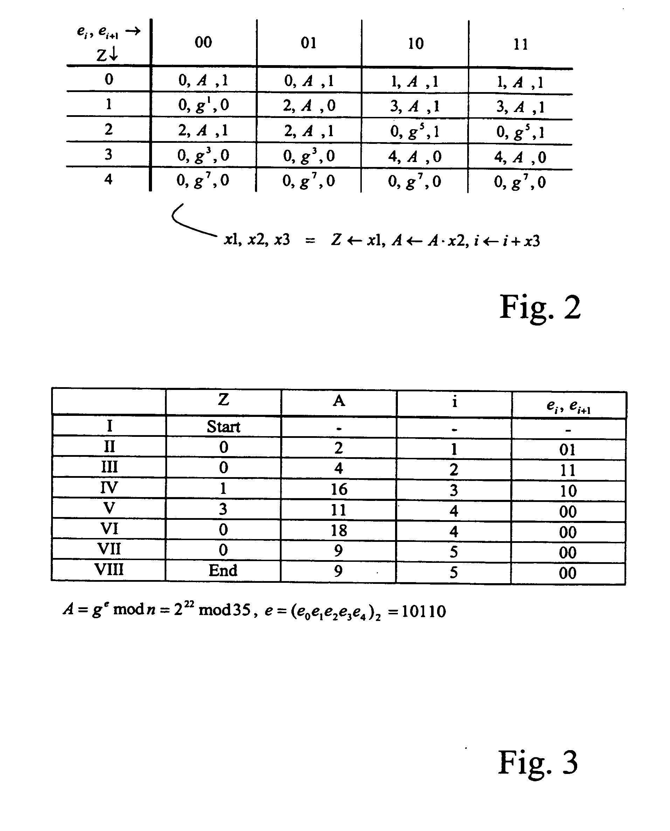

Ein zur Abwehr von Seitenkanalangriffen variiertes Sliding Window Verfahren zur Exponentiation ist in Benoît Chevallier-Mames, Mathieu Ciet, (G+) and Marc Joye, "Low-Cost Solutions for Preventing Simple Side-Channel Analysis: Side-Channel Atomicity", Cryptology ePrint Archive, Report 2003/237, 2003, http://eprint.iacr.org/oder IEEE transactions on computers, Vol. 53, No. 6, Juni 2004, Seiten 760-768, beschrieben. Dabei wird die Exponentiation in sogenannte Seitenkanal-atomare Blöcke zerlegt, d.h. in Teil-Operationen der Exponentiation, die unter gewissen Annahmen gegenüber Seitenkanalangriffen identisches Verhalten zeigen. In Abhängigkeit vom System, das zur Berechnung der Exponentiation verwendet wird, treffen die Annahmen mehr oder weniger zu. Genauer wird zur Berechnung einer Exponentiation einer Basis x mit einem Exponenten d zu einem Ergebnis y = x hoch d, gemäß dem Sliding Window Algorithmus, (vgl. Fig. 3) der Exponent d unter Verwendung von sechs Variablen s, k, b, t, l, u zerlegt und die Exponentiation als eine Abfolge gleichartiger Rechenoperationen R0 <- R0*Rus mit zwischen die gleichartigen Operationen geschalteten Zerlegungsschritten zerlegt. Eine einzelne Rechenoperation isoliert betrachtet ist gleichartig zu anderen Rechenoperationen. Die Zerlegungsschritte sind dagegen nicht gleichartig zueinander. Denn auf Grund der Vielzahl der zur Zerlegung des Exponenten d erforderlichen Variablen s, k, b, t, l, u sind unterschiedliche Zerlegungsschritte in der Regel unterschiedlich. Insbesondere die Zerlegungsschritte bieten einen Angriffspunkt für Seitenkanalangriffe.

Ein endlicher Automat, oder gleichbedeutend eine Zustandsmaschine (englisch: finite state machine) ist ein Modell eines Verhaltens, bestehend aus Zuständen und Zustandübergängen und Bedingungen, die zu Zustandsübergängen führen. Ein Automat heißt endlich, wenn die Menge der Zustände, die er annehmen kann, endlich ist.

Der Erfindung liegt die Aufgabe zu Grunde, einen schnelles Verfahren zur Berechnung einer Exponentiation gemäß dem Sliding Window Algorithmus zu schaffen, das einen verbesserten Schutz gegen Seitenkanalangriffe bietet.

Die Aufgabe wird gelöst durch ein Verfahren nach dem unabhängigen Anspruch 1. Vorteilhafte Ausgestaltungen der Erfindung sind in den abhängigen Ansprüchen angegeben.

Das erfindungsgemäße Verfahren gemäß dem unabhängigen Anspruch 1 ist zum Berechnen eines Ergebnisses A einer Exponentiation $A = g^e$ eingerichtet, mit einer Basis g und einem Exponenten e. Die Exponentiation ist wahlweise eine Exponentiation in einer multiplikativ geschriebenen Gruppe oder eine Multiplikation in einer additiv geschriebenen Gruppe. Das Ergebnis $A$ wird gemäß dem Sliding Window Algorithmus berechnet. Das Verfahren zeichnet sich dadurch aus, dass es als endlicher Automat implementiert ist.

Das Sliding Window Verfahren ist ein schnelles Verfahren zur Berechnung einer Exponentiation. Die Implementierung als endlicher Automat bewahrt diesen Geschwindigkeitsvorteil, im Vergleich zu beispielsweise Implementierungen mit Dummy-Operationen, und hat zugleich eine geringe Komplexität und ist daher relativ einfach gegen Seitenkanalangriffe zu sichern.

Der endliche Automat umfasst, entsprechend seiner Definition, eine endliche Mehrzahl von Zuständen und Zustandsübergänge zwischen den Zuständen. Der endliche Automat befindet sich stets in einem Zustand oder durchläuft gerade einen Zustandsübergang. Beim Sliding Window Algorithmus (3) erfolgt die Berechnung einer Exponentiation definitionsgemäß in mehreren Teilschritten. Die Teilschritte sind bedingt durch das Durchzählen des Index i. Die Mehrzahl von Teilschritten ergibt sich aus der Länge des Exponenten und kann im Trivialfall auch eins sein. In jedem Teilschritt wird eine Rechenoperation, nämlich eine Quadratur eines Zwischenergebnisses, gemäß $A' \cdot A'$, oder eine Multiplikation des Zwischenergebnisses $A'$, mit der Basis g, gemäß $A' \cdot g$, durchgeführt und ein Zustandsübergang durchgeführt. Dabei ist $A'$ ein Vielfaches der Basis $g$. Die Rechenoperation und der Zustandsübergang in einem jeweiligen Teilschritt sind durch den aktuellen Zustand des Automaten und durch den Wert eines in dem Teilschritt gerade abzuarbeitenden Teils des Exponenten festgelegt. Hierdurch wird die Berechnung der Exponentiation als Abfolge von gleichartigen Rechenoperationen und Zustandsübergängen durchgeführt. Diese Abfolge hinterlässt - im Vergleich zu einer direkten Implementierung des Sliding Window Algorithmus mit den stark unterschiedlichen Schritten 3.1. und 3.2 in Algorithmus (3) - (i.W.) keine Spuren des Exponentenwerts im Stromprofil der Berechnung und lässt daher keine Rückschlüsse auf den abgearbeiteten Exponenten zu.

Daher ist gemäß Anspruch 1 ein schnelles Verfahren zur Berechnung einer Exponentiation gemäß dem Sliding Window Algorithmus geschaffen, das einen verbesserten Schutz gegen Seitenkanalangriffe bietet.

Wahlweise hat der Exponent e eine Mehrzahl von Exponentenbits und weist das Verfahren eine Mehrzahl von Teilschritten auf, wobei in jedem Teilschritt ein Exponentenbit abgearbeitet wird.

Der endliche Automat umfasst, entsprechend seiner Definition, eine endliche Mehrzahl von Zuständen und Zustandsübergänge zwischen den Zuständen. Der endliche Automat befindet sich stets in einem Zustand oder durchläuft gerade einen Zustandsübergang. Beim Sliding Window Algorithmus (3) erfolgt die Berechnung einer Exponentiation definitionsgemäß in mehreren Teilschritten. Die Teilschritte sind bedingt durch das Durchzählen des Index i. Die Mehrzahl von Teilschritten ergibt sich aus der Länge des Exponenten und kann im Trivialfall auch eins sein. In jedem Teilschritt wird eine Rechenoperation, nämlich eine Quadratur eines Zwischenergebnisses, gemäß $A' \cdot A'$, oder eine Multiplikation des Zwischenergebnisses A' mit der Basis g, gemäß $A' \cdot g$, durchgeführt und ein Zustandsübergang durchgeführt. Dabei ist A' ein Vielfaches der Basis g. Die Rechenoperation und der Zustandsübergang in einem jeweiligen Teilschritt sind durch den aktuellen Zustand des Automaten und durch den Wert eines in dem Teilschritt gerade abzuarbeitenden Teils des Exponenten festgelegt. Hierdurch wird die Berechnung der Exponentiation als Abfolge von gleichartigen Rechenoperationen und Zustandsübergängen durchgeführt. Diese Abfolge hinterlässt - im Vergleich zu einer direkten Implementierung des Sliding Window Algorithmus mit den stark unterschiedlichen Schritten 3.1. und 3.2 in Algorithmus (3) - (i.W.) keine Spuren des Exponentenwerts im Stromprofil der Berechnung und lässt daher keine Rückschlüsse auf den abgearbeiteten Exponenten zu.

Daher ist gemäß Anspruch 1 ein schnelles Verfahren zur Berechnung einer Exponentiation gemäß dem Sliding Window Algorithmus geschaffen, das einen verbesserten Schutz gegen Seitenkanalangriffe bietet.

Wahlweise hat der Exponent e eine Mehrzahl von Exponentenbits und weist das Verfahren eine Mehrzahl von Teilschritten auf, wobei in jedem Teilschritt ein Exponentenbit abgearbeitet wird.

Der endliche Automat umfasst, entsprechend seiner Definition, eine endliche Mehrzahl von Zuständen und Zustandsübergänge zwischen den Zuständen. Der endliche Automat befindet sich stets in einem Zustand oder durchläuft gerade einen Zustandsübergang. Beim Sliding Window Algorithmus (3) erfolgt die Berechnung einer Exponentiation definitionsgemäß in mehreren Teilschritten. Die Teilschritte sind bedingt durch das Durchzählen des Index i. Die Mehrzahl von Teilschritten ergibt sich aus der Länge des Exponenten und kann im Trivialfall auch eins sein. In jedem Teilschritt wird eine Rechenoperation, nämlich eine Quadratur eines Zwischenergebnisses, gemäß $A' \cdot A'$, oder eine Multiplikation des Zwischenergebnisses $A'$ mit der Basis g, gemäß $A' \cdot g$, durchgeführt und ein Zustandsübergang durchgeführt. Dabei ist $A'$ ein Vielfaches der Basis $g$. Die Rechenoperation und der Zustandsübergang in einem jeweiligen Teilschritt sind durch den aktuellen Zustand des Automaten und durch den Wert eines in dem Teilschritt gerade abzuarbeitenden Teils des Exponenten festgelegt. Hierdurch wird die Berechnung der Exponentiation als Abfolge von gleichartigen Rechenoperationen und Zustandsübergängen durchgeführt. Diese Abfolge hinterlässt - im Vergleich zu einer direkten Implementierung des Sliding Window Algorithmus mit den stark unterschiedlichen Schritten 3.1. und 3.2 in Algorithmus (3) - (i.W.) keine Spuren des Exponentenwerts im Stromprofil der Berechnung und lässt daher keine Rückschlüsse auf den abgearbeiteten Exponenten zu.

Daher ist gemäß Anspruch 1 ein schnelles Verfahren zur Berechnung einer Exponentiation gemäß dem Sliding Window Algorithmus geschaffen, das einen verbesserten Schutz gegen Seitenkanalangriffe bietet.

Wahlweise hat der Exponent e eine Mehrzahl von Exponentenbits und weist das Verfahren eine Mehrzahl von Teilschritten auf, wobei in jedem Teilschritt ein Exponentenbit abgearbeitet wird.

Wahlweise wird in jedem Teilschritt eine durch die Tabelle festgelegte Rechenoperation, nämlich Quadratur oder/und Multiplikation, durchgeführt und ein durch die Tabelle festgelegter Zustandsübergang durchgeführt.

Wahlweise sind die Rechenoperation - Quadratur oder/ und Multiplikation - und der Zustandsübergang durch einen aktuellen Zustand und durch den Wert eines gerade abzuarbeitenden Exponentenbits festgelegt.

Wahlweise wird bei dem Verfahren weiter mindestens eine Vorberechnung durchgeführt. Die Vorberechnung wird vorzugsweise vor der Durchführung des Verfahrens durchgeführt. Ein oder mehrere Ergebnisse der Vorberechnung werden wahlweise abgespeichert und für die Durchführung des Verfahrens bereitgehalten. Bei der Vorberechnung werden beispielsweise Vielfache der Basis vorberechnet und abgespeichert, insbesondere die Vielfachen gemäß dem Vorberechnungsschritt 1 des Sliding Window Algorithmus (3).

Wahlweise ist die Exponentiation eine modulare Exponentiation $A = g^e \bmod n$, mit einem Modul n. Dies ist beispielsweise der Fall, wenn g ein Element aus der Gruppe $Z_n$ ist.

Bei dem Verfahren wird als Sliding Window Algorithmus wahlweise ein Sliding Window Algorithmus mit fester Fenstergröße verwendet, beispielsweise mit Fenstergröße k = 3.

Bei einem Verfahren zur kryptographischen Verschlüsselung einer Nachricht durch modulare Exponentiation der Nachricht wird das Berechnen der modularen Exponentiation gemäß der Erfindung durchgeführt.

Ein System mit einem darin implementierten erfindungsgemäßen Verfahren zum Berechnen eines Ergebnisses A einer Exponentiation oder zur kryptographischen Verschlüsselung einer Nachricht durch modulare Exponentiation der Nachricht ist wahlweise als Chipkarte oder als anders geformter Token gestaltet.

Im Folgenden wird die Erfindung an Hand von Ausführungsbeispielen und unter Bezugnahme auf die Zeichnung näher erläutert, in der zeigen:

Fig. 1 ein Flussdiagramm zur Veranschaulichung eines endlichen Automa- ten zur Implementierung eines Sliding Window Verfahrens mit Fens- tergröße 3, gemäß einer Ausführungsform der Erfindung;

Fig. 2 eine Tabelle, durch die das Flussdiagramm aus Fig. 1 abgebildet ist;

Fig. 3 eine Tabelle zur Berechnung einer beispielhaften Exponentiation, ge- mäß einer Ausführungsform der Erfindung.

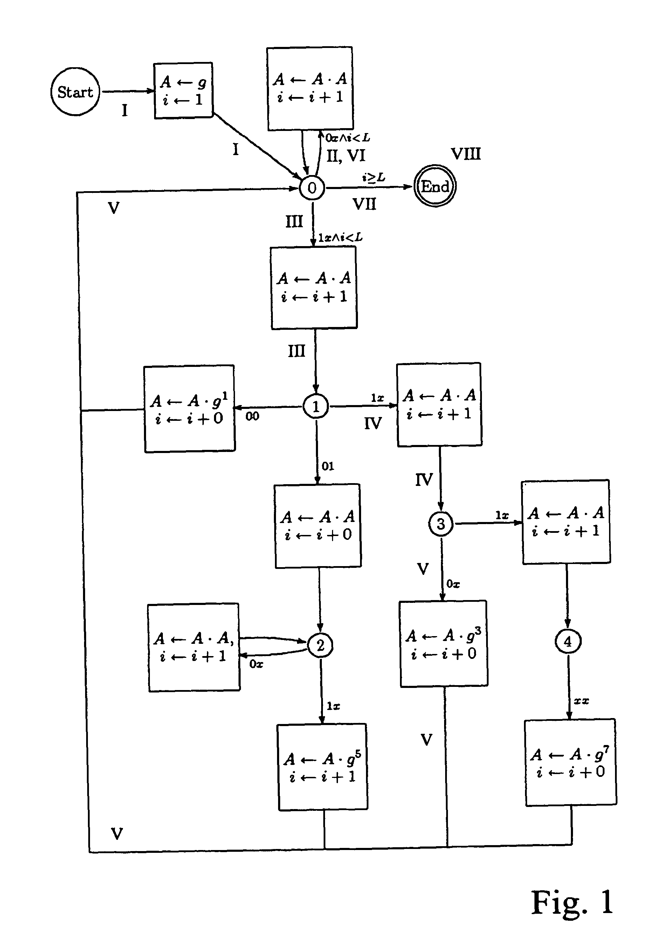

Fig. 1 zeigt ein Flussdiagramm zur Veranschaulichung eines endlichen Automaten zur Implementierung eines Sliding Window Verfahrens mit Fenstergröße 3, gemäß einer Ausführungsform der Erfindung. Der endliche Automat ist in einer Chipkarte implementiert und dazu eingerichtet, vom Prozessor der Chipkarte abgearbeitet zu werden. Der endliche Automat aus Fig. 1 ist für ein Sliding Window Verfahren mit fester Fenstergröße k = 3 eingerichtet. Mit dem endlichen Automaten aus Fig. 1 lässt sich für beliebige Exponenten $e \neq 0$ das Ergebnis $A = g^e$ einer Exponentiation einer Basis $g$ mit dem Exponenten $e$ berechnen. Für einen Exponenten $e = 0$ wird statt der in Fig. 1 angegebenen Initialisierung $A \leftarrow g$ (Kästchen neben "Start") eine Initialisierung $A \leftarrow 1$ durchgeführt und ansonsten der Automat aus Fig. 1 verwendet.

Vor der Durchführung des Verfahrens wurden $g^3, g^5, g^7$ vorberechnet und abgespeichert, beispielsweise in Registern der Chipkarte.

Die Variable A bezeichnet ein Register für Zwischenergebnisse. Im Folgenden und in den Figuren werden, gemäß mathematischer Konvention, sowohl Zwischenergebnisse als auch das Endergebnis mit $A$ bezeichnet, wohingegen bei der Beschreibung zu den Ansprüchen zugunsten der Eindeutigkeit Zwischenergebnisse mit $A'$ und das Endergebnis $A$ mit bezeichnet sind.

In Fig. 1 sind durch Kreise mit Ziffern 0, 1, 2, 3 bzw. 4 Zustände bezeichnet. Durch Pfeile sind Zustandsübergänge bezeichnet. Durch eckige Kästen ist angegeben, welche Aktionen bei einem Zustandsübergang auszuführen sind. Die Bezeichnungen an den Pfeilen für die Zustandsübergänge, z.B. 00 oder 01, bedeuten, dass dieser Zustandsübergang durchgeführt wird, wenn die beiden benachbarten Exponentenbits mit Indices $i, i + 1$ die entsprechenden Werte haben, z.B. 0,0 bzw. 0,1. Der Exponent $e = (e_0 e_1 \cdots e_{L-1} e_L)_2$ ist in Binärdarstellung angegeben, mit $e_0 = 1$. Der Exponent ist $L$ Bits lang. Die Variable i dient als Index für die Exponentenbits. Exponentenbits $e_i$ mit Index $i \geq L$ werden als Null angesehen. Die Bezeichnungen 0x und 1x zeigen an, dass der Wert des Exponentenbits am Index $i + 1$ beliebig ist, bei xx sind beide Exponentenbits $i, i + 1$ beliebig. Die römischen Ziffern in Fig. 1 beziehen sich auf das Beispiel aus Fig. 3 und sind im Zusammenhang mit Fig. 3 weiter unten beschrieben.

Im Folgenden soll verifiziert werden, dass durch den endlichen Automaten aus Fig. 1 tatsächlich das Sliding Window Verfahren mit Fenstergröße 3 implementiert ist. Beim Sliding Window Verfahren mit Fenstergröße 3 werden bis zu höchstens drei Exponentenbits auf einmal abgearbeitet. Ein Fenster beginnt und endet stets mit einer 1 (vgl. Schritt 3.2 in Algorithmus (3)). Als mögliche abzuarbeitende Fenster ergeben sich daher die Fenster 1, 11, 101 und 111. Der endliche Automat wird beispielhaft für das Fenster 101 nachvollzogen. Der Automat beginnt zunächst in einem Startzustand "Start" und geht von dort in den Zustand Null über. Die Abarbeitung eines Fensters beginnt und endet stets im Zustand Null. Die Variable $A$ wird mit $A \leftarrow g$ initialisiert, der Index für den Exponenten mit $i \leftarrow 1$. Das erste Bit des Fensters 101 ist 1. Zugleich ist der Index i kleiner als die Exponentenlänge $L$. Deshalb geht der Automat in den Zustand Eins über, führt eine Quadrierung durch, $A \leftarrow A \cdot A$, und betrachtet das nächste Bit, $i \leftarrow i + 1$, d.h. , $i = 2$. Die nächsten beiden Exponentenbits sind 01. Der Automat geht daher in den Zustand Zwei über, führt eine Quadrierung durch, $A \leftarrow A \cdot A$, und betrachtet dasselbe Bit nochmals, da der Index gemäß $i \leftarrow i + 0$ nicht hochgezählt wird. Der Automat sieht weiterhin die Bits 01, bleibt also im Zustand Zwei, führt eine Quadrierung durch, $A \leftarrow A \cdot A$, und betrachtet das nächste Bit, $i \leftarrow i + 1$, d.h. $i = 3$. Nun sieht der Automat das letzte Bit Eins des Fensters, geht in den Zustand Null, multipliziert mit $g^5$ und schiebt mit dem Setzen von $i \leftarrow i + 1$, d.h. $i = 4$, den Bit-Index über das letzte Bit hinaus, so dass also $i \geq L$ ist. Der Automat befindet sich nun wieder im Zustand Null und hat drei Quadrierungen und eine Multiplikation mit $g^5$ durchgeführt. Das sind genau die Quadrierungen und Multiplikationen, die ein Sliding Window Algorithmus gemäß (3) durchführt. Schließlich geht der Automat in einen Endzustand "End" über.

Fig. 2 zeigt eine Tabelle, mit der sich der endliche Automat aus Fig. 1 implementieren lässt, gemäß einer Ausführungsform der Erfindung. Die Tabelle hat fünf Zeilen, entsprechend den fünf Zuständen des Automaten, 0, 1, 2, 3, 4, und vier Spalten, entsprechend den vier Kombinationsmöglichkeiten 00, 01, 10, 11 des Paars von Exponentenbits $e_i, e_{i+1}$. In jedem Teilschritt der Berechnung einer Exponentiation mit dem endlichen Automaten wählt der Automat in der Tabelle die Zeile entsprechend dem aktuellen Zustand und die Spalte entsprechend den Werten der Exponentenbits $e_i, e_{i+1}$, aus. Im Tabellenfeld zur ausgewählten Zeile und Spalte sind angegeben: der neue Zustand Z (z.B. x1), der durch den durchzuführenden Zustandsübergang eingenommen werden wird, der Faktor (z.B. x2), mit dem das aktuelle Zwischenergebnis $A$ zu multiplizieren ist, nämlich $A$ selbst, $g$, $g^3$, $g^5$ oder $g^7$, und der Wert, um den der Exponentenbit-Index $i$ (z.B. x3) zu erhöhen ist, nämlich 0 oder 1. Beispielsweise wird, wenn sich der Automat im Zustand 1 (Eins) befindet und die Werte der anstehenden Exponentenbits $e_i, e_{i+1} = 10$ sind, der Automat in den Zustand 3 (Drei) übergeführt, $A$ mit $A$ multipliziert und der Exponentenbit-Index i um Eins erhöht, d.h. $i \leftarrow i + 1$. Zur Berechnung der Exponentiation muss also nur ein sehr einfaches Programm ablaufen, das sich durch die Tabelle hangelt. Aufgrund der geringen Komplexität ist die Implementierung der Sliding Window Exponentiation als endlicher Automat daher relativ leicht gegen Stromangriffe wie SPA oder DPA abzusichern. Die geringe Komplexität führt darüber hinaus zu einer geringen Rechenzeit.

Im Folgenden wird an Hand der Tabelle aus Fig. 3 die Berechnung einer Exponentiation in acht Schritten I bis VIII dargelegt, gemäß einer Ausführungsform der Erfindung. In Fig. 3 bezeichnet Z den Zustand des endlichen Automaten. Genauer wird der Ablauf der erfindungsgemäßen Exponentiation an Hand der Berechnung von $A = m^e$ mod $n = 2^{22}$ mod35 dargelegt. In diesem Beispiel ist die Basis $g = 2$, und vorab werden $g^3$ mod 35 = 8, $g^5$ mod35 = 32 und $g^7$ mod35 = 23 berechnet und abgespeichert. Die Binärdarstellung des Exponenten ist $e = (e_0 e_1 e_2 e_3 e_4)_2 = 10110$. Der Exponent ist fünf Bits lang, d.h. die Exponentenlänge ist $L = 5$. Die Zustandsübergänge der Schritte I bis VIII sind auch in das Flussdiagramm in Fig. 1 eingezeichnet.

Das erste Bit $e_0$ des Exponenten 10110, mit anderen Worten das höchstwertige Bit, mit Wert Eins, wird durch die Initialisierung $A \leftarrow g$ abgearbeitet. Das einzige Fenster besteht aus den beiden Bits $e_2 e_3$ mit Wert 11 in der Mitte des Exponenten. Man erwartet also drei Quadrierungen, eine Multiplikation mit $g^3$ und eine weitere Quadrierung. Die Schritte I bis VIII sind im Folgenden unter Bezugnahme auf Fig. 3 beschrieben.

I. Das Verfahren beginnt im Zustand "Start", $A$ wird mit $A \leftarrow g = 2$ initialisiert, $i$ wird mit $i \leftarrow 1$ initialisiert, dann geht der Automat in den Zustand 0 über.

II. Der Automat befindet sich im Zustand $Z = 0$ *mit* $A = 2$ und $i = 1$. Das Exponentenbitpaar $e_i e_{i+1} = e_1 e_2$ hat den Wert $e_1 e_2 = 01$. Gemäß Fig. 1 oder Fig. 2 führt der Automat einen Zustandsübergang durch, der wieder in den Zustand Z = 0 führt. $A$ wird gemäß Fig. 1, 2 mit $A$ modular multipliziert und dadurch auf den neuen Wert $A \leftarrow A \cdot A$ mod 35 = 2 · 2 mod 35 = 4 gesetzt und der Index $i$ gemäß Fig. 1, 2 auf $i \leftarrow i + 1 = 2$ gesetzt.

III. Der Automat befindet sich im Zustand $Z = 0$, *mit* $A = 4$ und $i = 2$. Das Exponentenbitpaar $e_i e_{i+1} = e_2 e_3$ hat den Wert $e_2 e_3 = 11$. Gemäß Fig. 1, 2 erfolgt ein Zustandsübergang in den Zustand $Z = 1$ (Eins), $A$ wird $A \leftarrow A \cdot A$ mod35 = 4 · 4 mod 35 = 16 gesetzt und der Index i auf $i \leftarrow i + 1 = 3$ gesetzt.

IV. Der Automat befindet sich im Zustand Z = 1, mit $A = 16$ und $i = 3$. Es gilt $e_i e_{i+1} = e_3 e_4 = 10$. Dies führt zu einem Übergang in den Zustand Z = 3 , Berechnung von $A \leftarrow A \cdot A$ mod 35 = 16 · 16 mod 35 =11 und Setzen des Index $i$ auf $i \leftarrow i + 1 = 4$.

V. Der Automat befindet sich im Zustand Z = 3, mit $A = 11$ und $i = 4$. Es gilt $e_i e_{i+1} = e_4 e_5 = 00$. Dies führt zu einem Zustandsübergang in den Zustand $Z = 0$, einer Berechnung von $A \leftarrow A \cdot g^3$ mod 35 = 11 · 8 mod 35 = 18. Der Index $i$ bleibt unverändert, $i \leftarrow i + 0 = 4$.

VI. Der Automat befindet sich im Zustand $Z = 0$, mit $A = 18$ und $i = 4$. Es gilt $e_i e_{i+1} = e_4 e_5 = 00$. Dies führt zu einem Zustandsübergang in den Zustand $Z = 0$, einer Berechnung von $A \leftarrow A \cdot A$ mod35 = 18·18 mod35 = 9 und Setzen des Index $i$ auf $i \leftarrow i + 1 = 5$.

VII. Der Automat befindet sich im Zustand $Z = 0$, *mit* $A = 9$ und $i = 5$. Nun ist der Exponentenindex $i \geq L$. Gemäß dem Flussdiagramm aus Fig. 1 geht der Automat in den Endzustand "End" über.

VIII. Das Verfahren endet im Zustand "End" mit der Ausgabe $A = 9$ als dem Ergebnis der Exponentiation $A = m^e$ mod $n = 2^{22}$ mod35.

Mit dem Verfahren gemäß den Schritten I bis VIII wird die Exponentiation $A = m^e$ mod $n = 2^{22}$ mod 35 durch die folgenden Rechenschritte berechnet: drei Quadrierungen, eine Multiplikation mit $g^3$ und eine weitere Multiplikation. Dies sind genau die Rechenschritte, die durch den Sliding Window Algorithmus (3) für die Exponentiation $A = m^e$ mod $n = 2^{22}$ mod 35 festgelegt sind.

## Patentansprüche

1. Kryptographisches Verfahren zum Berechnen eines Ergebnisses A einer Exponentiation $A = g^e$, mit einer Basis $g$ und einem Exponenten $e$ in einem System, insbesondere in einer Chipkarte oder einem anders geformten Token, wobei das Ergebnis $A$ gemäß dem Sliding Window Algorithmus berechnet wird, **dadurch gekennzeichnet, dass** das Verfahren als endlicher Automat implementiert ist, der als Tabelle mit Zuständen und Zustandsübergängen implementiert ist, und die Berechnung der Exponentiation als Abfolge von gleichartigen Rechenoperationen, nämlich jeweils einer Quadratur oder einer Multiplikation, und Zustandsübergängen durchgeführt wird, welche Abfolge im Wesentlichen keine Spuren eines Werts des Exponenten e im Stromprofil der Berechnung hinterlässt und daher keine Rückschlüsse auf den abgearbeiteten Exponenten e zulässt.

2. Verfahren nach Anspruch 1, wobei der Exponent $e$ eine Mehrzahl von Exponentenbits hat und wobei das Verfahren eine Mehrzahl von Teilschritten aufweist, wobei in jedem Teilschritt ein oder mehrere Exponentenbits abgearbeitet wird oder werden.

3. Verfahren nach Anspruch 2, wobei in jedem Teilschritt eine durch die Tabelle festgelegte Rechenoperation, nämlich Quadratur oder/und Multiplikation, durchgeführt wird und ein durch die Tabelle festgelegter Zustandsübergang durchgeführt wird.

4. Verfahren nach einem der Ansprüche 1 bis 3, bei dem weiter mindestens eine Vorberechnung durchgeführt wird.

**5.** Verfahren nach einem der Ansprüche 1 bis 4, wobei die Exponentiation eine modulare Exponentiation $A = g^e$ mod $n$, mit einem Modul n, ist.

**6.** Verfahren nach einem der Ansprüche 1 bis 5, wobei als Sliding Window Algorithmus ein Sliding Window Algorithmus mit fester Fenstergröße verwendet wird.

**7.** Verfahren zur kryptographischen Verschlüsselung einer Nachricht durch modulare Exponentiation der Nachricht, wobei das Berechnen der modularen Exponentiation gemäß einem der Ansprüche 1 bis 6 durchgeführt wird.

**8.** System mit einem darin implementierten Verfahren nach einem der Ansprüche 1 bis 7.

**9.** System nach Anspruch 8, das als Chipkarte gestaltet ist.

## Claims

**1.** A cryptographic method for calculating a result $A$ of an exponentiation $A = g^e$, with a base $g$ and an exponent $e$ in a system, in particular in a chip card or a differently shaped token, wherein the result $A$ is calculated according to the sliding window algorithm, **characterized in that** the method is implemented as a finite-state machine which is implemented as a table with states and state transitions, and the calculation of the exponentiation is carried out as a sequence of like arithmetic operations, namely, a squaring or a multiplication in each case, and state transitions, which sequence leaves substantially no traces of a value of the exponent $e$ in the current profile of the calculation and hence allows no conclusions to be drawn about the processed exponent e.

**2.** The method according to claim 1, wherein the exponent e has a plurality of exponent bits and wherein the method has a plurality of substeps, there being processed in each substep one or several exponent bits.

**3.** The method according to claim 2, wherein in each substep an arithmetic operation defined by the table, namely, squaring or/and multiplication, is carried out and a state transition defined by the table is carried out.

**4.** The method according to any of claims 1 to 3, wherein further at least one precalculation is carried out.

**5.** The method according to any of claims 1 to 4, wherein the exponentiation is a modular exponentiation $A = g^e$ mod $n$, with a modulus n.

**6.** The method according to any of claims 1 to 5, wherein the sliding window algorithm employed is a sliding window algorithm with a fixed window size.

**7.** A method for cryptographic encryption of a message by modular exponentiation of the message, wherein the calculation of the modular exponentiation is carried out according to any of claims 1 to 6.

**8.** A system having a method according to any of claims 1 to 7 implemented therein.

**9.** The system according to claim 8, which is designed as a chip card.

## Revendications

**1.** Procédé cryptographique de calcul d'un résultat A d'une exponentiation $A = g^e$, avec une base g et un exposant e dans un système, en particulier dans une carte à puce ou un jeton de forme différente, le résultat A étant calculé conformément à l'algorithme de fenêtre glissante, **caractérisé en ce que** le procédé est implémenté comme automate final, lequel est implémenté comme tableau avec des états et des transitions d'états, et en ce que le calcul de l'exponentiation est effectué comme séquence d'opérations de calcul similaires, en l'occurrence de quadratures ou de multiplications, et de transitions d'états, ladite séquence ne laissant sensiblement aucune trace d'une valeur de l'exposant e dans le profil de flux du calcul et ne permettant donc pas de déduire l'exposant e exécuté.

**2.** Procédé selon la revendication 1, où l'exposant e présente une pluralité de bits d'exposant et où le procédé comprend une pluralité d'étapes partielles, un ou plusieurs bits d'exposant étant exécutés lors de chaque étape partielle.

**3.** Procédé selon la revendication 2, où une opération de calcul fixée par le tableau, en l'occurrence une quadrature et/ou une multiplication, est effectuée lors de chaque étape partielle, et où une transition d'états fixée par le tableau est exécutée.

**4.** Procédé selon l'une des revendications 1 à 3, où au moins un calcul préalable est en outre effectué.

**5.** Procédé selon l'une des revendications 1 à 4, où l'exponentiation est une exponentiation modulaire $A = g^e$ mod $n$, avec un module n.

**6.** Procédé selon l'une des revendications 1 à 5, où un algorithme de fenêtre glissante à grandeur fixe de fenêtre est appliqué comme algorithme de fenêtre glissante.

7. Procédé de codage cryptographique d'une information par exponentiation modulaire de ladite information, le calcul de l'exponentiation modulaire étant effectué selon l'une des revendications 1 à 6.

8. Système où est implémenté un procédé selon l'une des revendications 1 à 7.

9. Système selon la revendication 8, réalisé comme carte à puce.

Fig. 1

| $e_i, e_{i+1} \rightarrow$ $Z\downarrow$ | 00 | 01 | 10 | 11 |
|---|---|---|---|---|
| 0 | $0, A, 1$ | $0, A, 1$ | $1, A, 1$ | $1, A, 1$ |
| 1 | $0, g^1, 0$ | $2, A, 0$ | $3, A, 1$ | $3, A, 1$ |
| 2 | $2, A, 1$ | $2, A, 1$ | $0, g^5, 1$ | $0, g^5, 1$ |
| 3 | $0, g^3, 0$ | $0, g^3, 0$ | $4, A, 0$ | $4, A, 0$ |
| 4 | $0, g^7, 0$ | $0, g^7, 0$ | $0, g^7, 0$ | $0, g^7, 0$ |

$$x1, x2, x3 \;=\; Z \leftarrow x1, A \leftarrow A \cdot x2, i \leftarrow i + x3$$

# Fig. 2

| | Z | A | i | $e_i, e_{i+1}$ |
|---|---|---|---|---|
| I | Start | - | - | - |
| II | 0 | 2 | 1 | 01 |
| III | 0 | 4 | 2 | 11 |
| IV | 1 | 16 | 3 | 10 |
| V | 3 | 11 | 4 | 00 |
| VI | 0 | 18 | 4 | 00 |
| VII | 0 | 9 | 5 | 00 |
| VIII | End | 9 | 5 | 00 |

$$A = g^e \bmod n = 2^{22} \bmod 35, \; e = (e_0 e_1 e_2 e_3 e_4)_2 = 10110$$

# Fig. 3

**EP 2 128 754 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Differential power analysis. **Paul C. Kocher ; Joshua Jaffe ; Benjamin Jun.** CRYPTO '99. 1999, 388-397
- Template Attacks. **Suresh Chari ; Josyula R. Rao ; Pankaj Rohatgi.** Cryptographic Hardware and Embedded Systems. Springer-Verlag, 2003, 13-28
- **Fachartikel Nadia Nedjah ; Luiza de Macedo Mourelle ; Rodrigo Martins da Silva.** Efficient Hardware for Modular Exponentiation Using the Sliding-Window Method. *IEEE International Conference on Information Technology,* 2007
- **Benoît Chevallier-Mames ; Mathieu Ciet ; Marc Joye.** Low-Cost Solutions for Preventing Simple Side-Channel Analysis: Side-Channel Atomicity. *Cryptology ePrint Archive,* 2003, http://eprint.iacr.org
- *IEEE transactions on computers,* Juni 2004, vol. 53 (6), 760-768